# FASCICULE DE BREVET EUROPEEN

(11) **EP 1 360 082 B1**
(45) Date de publication et mention de la délivrance du brevet: **18.03.2009**
(21) Numéro de dépôt: 02711945.2
(22) Date de dépôt: 11.01.2002
(51) Int. Cl.: B60J 7/14, B60J 7/20

(54) **TOIT ESCAMOTABLE POUR VEHICULE A ELEMENTS AVANT ET INTERMEDIAIRE COULISSANTS ET A ELEMENT ARRIERE PIVOTANT ET COULISSANT**
VERSENKBARES FAHRZEUGDACH MIT VERSCHIEBBAREN VORDER- UND ZWISCHENELEMENTEN UND EINEM SCHWENKBAREN UND VERSCHIEBBAREN HINTERENTELEMENT
VEHICLE RETRACTABLE ROOF WITH SLIDING FRONT AND INTERMEDIATE ELEMENTS AND PIVOTING AND SLIDING REAR ELEMENT

(30) Priorité: 14.02.2001 FR 0102013
(43) Date de publication de la demande: 12.11.2003
(73) Titulaire: Société Européenne de Brevets Automobiles - SEBA, 75011 Paris (FR)
(72) Inventeur: QUEVEAU, Gérard, F-79140 Le Pin (FR); GUILLEZ, Jean-Marc, F-79140 Cirières (FR)
(74) Mandataire: Geismar, Thierry
(86) Numéro de dépôt international: PCT/FR2002/000114
(87) Numéro de publication internationale: WO 2002/064392

(56) Documents cités:
- EP-A- 0 835 780
- EP-A- 0 899 142
- EP-A- 0 993 979

## Description

L'invention concerne un toit escamotable pour véhicules comprenant plusieurs éléments de toit rigides déplaçables entre une position dans laquelle ils recouvrent l'habitacle du véhicule et une position dans laquelle ils sont rangés dans le coffre arrière du véhicule.

Un tel toit escamotable permet de transformer un véhicule du type berline ou coupé en un véhicule du type cabriolet.

Le brevet français No. 2 816 248, qui a été publié à une date postérieure à la présente demande et qui est au nom de la demanderesse, décrit un toit escamotable comprenant un élément arrière dont le déplacement vers le coffre arrière du véhicule est commandé par un bras pivotant articulé à la carrosserie et par une glissière s'étendant dans le coffre.

L'élément arrière est relié à l'élément intermédiaire par des leviers pivotants. De même , l'élément intermédiaire est relié à l'élément avant par des leviers pivotants. Ces leviers pivotants font basculer les éléments intermédiaire et avant vers le haut et au-dessus de l'élément arrière, lors du déplacement de ces éléments vers le coffre.

L'avantage de ce système, essentiellement pivotant est que le centre de gravité de l'ensemble des éléments est très rapidement déporté vers l'arrière, ce qui est avantageux pour la tenue mécanique de l'ensemble, notamment dans le cas où le toit présente une longueur importante et de ce fait un porte à faux important, lorsqu'il est détaché de la partie avant de la carrosserie.

L'inconvénient est que, les éléments avant et intermédiaire, montent relativement haut au-dessus du véhicule, du fait du mouvement des leviers pivotants, lorsqu'ils sont déplacés vers le coffre.

Le brevet français No. 2818931, qui a été publié à une date postérieure à la présente demande et qui est au nom de la demanderesse décrit un toit escamotable comprenant un élément arrière associé à des glissières pour pouvoir coulisser vers le coffre.

De même, les éléments intermédiaires et avant sont associés à des glissières pouvant coulisser l'une par rapport à l'autre et par rapport à l'élément arrière.

Les avantages et les inconvénients de ce toit escamotable essentiellement coulissant sont exactement inverses de ceux du toit escamotable essentiellement pivotant décrit plus haut.

En effet, le porte à faux vers l'avant reste longtemps important lors du mouvement du toit vers le coffre.

En revanche, le toit ne monte pas haut au-dessus du véhicule lors de son déplacement vers le coffre.

Le but de la présente invention est de remédier aux inconvénients des toits escamotables décrits ci-dessus.

L'invention vise ainsi un toit escamotable pour véhicule, comprenant trois éléments de toit rigides, déplaçables entre une position dans laquelle ils recouvrent l'habitacle du véhicule et une position dans laquelle, ils sont rangés à l'intérieur du coffre arrière du véhicule, l'élément avant pouvant coulisser par rapport à l'élément intermédiaire et ce dernier pouvant coulisser par rapport à l'élément arrière grâce à des doigts portés par l'élément avant et par l'élément intermédiaire, engagés dans des glissières s'étendant le long des éléments intermédiaire et arrière.

Suivant l'invention, ce toit escamotable est caractérisé en ce que le déplacement de l'élément arrière vers le coffre arrière est commandé d'une part par un bras pivotant articulé en un point fixe de la carrosserie du véhicule et articulé audit élément arrière et d'autre part par une glissière s'étendant à l'intérieur du coffre arrière dans laquelle est engagé un doigt solidaire de la partie arrière de l'élément arrière.

Le toit escamotable reprend ainsi la partie avant coulissante du toit décrit dans le brevet français No. 2 818 931 et la partie arrière pivotante et coulissante du brevet français No. 2 816 248.

Un tel toit escamotable présente les avantages propres aux deux toits décrits précédemment (porte à faux réduit et montée moins haute du toit) sans en présenter les inconvénients.

De plus, lorsque le coulissement des éléments avant et intermédiaire vers l'élément arrière est commandé par des moteurs électriques ou hydrauliques embarqués dans lesdits éléments, le bras pivotant articulé à l'élément arrière peut supporter le câble électrique ou les tubulures flexibles d'alimentation des moteurs électriques ou hydrauliques.

Cependant, dans une version préférée de l'invention, ledit bras pivotant coopère, lors de son pivotement, avec un mécanisme commandant le coulissement de l'élément intermédiaire par rapport à l'élément arrière.

Dans une réalisation avantageuse de l'invention, ledit mécanisme comprend un pignon dont la rotation est commandée par le pivotement du bras, ce pignon étant relié par d'autres pignons à une poulie sur laquelle est enroulée un câble relié à l'avant de l'élément intermédiaire, de sorte que l'enroulement du câble sur ladite poulie provoque le coulissement de l'élément intermédiaire le long des glissières s'étendant le long de l'élément arrière.

D'autres particularités et avantages de l'invention apparaîtront encore dans la description ci-après :
Aux dessins annexés, donnés à titre d'exemples non limitatifs :
   - la figure 1 est une vue schématique en coupe longitudinale de l'arrière d'un véhicule équipé d'un toit escamotable selon l'invention, ce dernier étant en cours d'ouverture ;
   - la figure 2 est une schématique partielle, en coupe longitudinale, montrant le toit escamotable en positions de fermeture et de rangement à l'intérieur du coffre du véhicule, ainsi que le mécanisme de commande de ce toit ;
   - la figure 3 est une vue schématique, en coupe transversale partielle de l'élément arrière du toit, montrant le mécanisme de commande de ce toit.

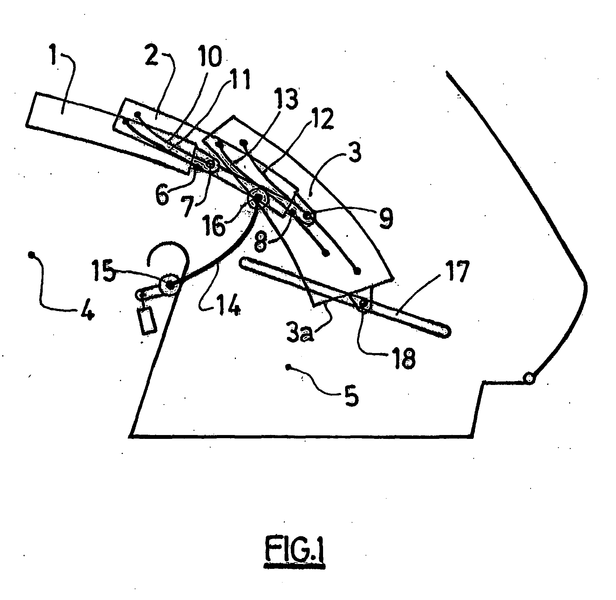

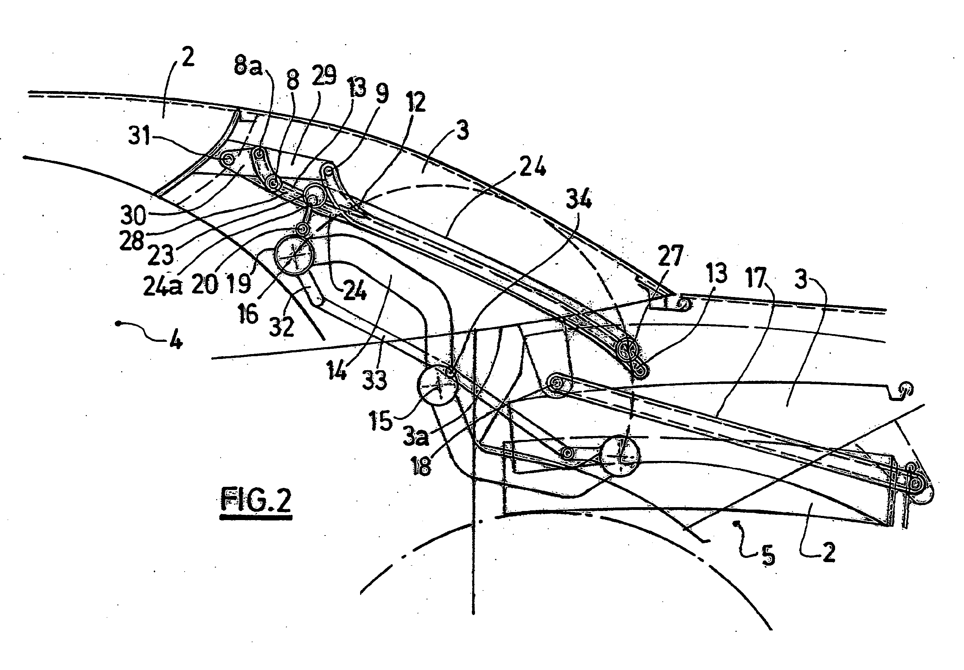

Les figures 1 et 2 représentent un toit escamotable pour véhicule, comprenant trois éléments de toit rigides 1, 2, 3, déplaçables entre une position dans laquelle ils recouvrent l'habitacle 4 du véhicule et une position dans laquelle, ils sont rangés à l'intérieur du coffre arrière 5 du véhicule.

L'élément avant 1 peut coulisser par rapport à l'élément intermédiaire 2 et ce dernier peut coulisser par rapport à l'élément arrière 3 grâce à des doigts 6, 7 ; 8, 9 portés par l'élément avant 1 et par l'élément intermédiaire 2, engagés dans des glissières 10, 11 ; 12, 13 s'étendant le long des éléments intermédiaire 2 et arrière 3.

Le déplacement de l'élément arrière 3 vers le coffre arrière 5 est commandé d'une part par un bras pivotant 14 articulé en un point fixe 15 de la carrosserie du véhicule et articulé en 16 audit élément arrière 3 et d'autre part par une glissière 17 s'étendant à l'intérieur du coffre arrière 5 dans laquelle est engagé un doigt 18 solidaire de la partie arrière 3a de l'élément arrière 3.

Conformément à l'invention, le bras pivotant 14 coopère, lors de son pivotement, avec un mécanisme commandant le coulissement de l'élément intermédiaire 2 par rapport à l'élément arrière 3.

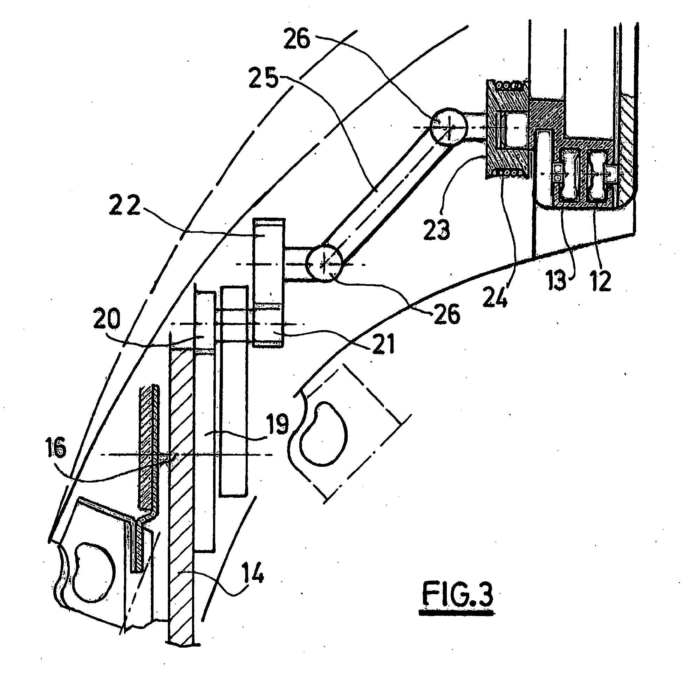

Comme montré par la figure 2, le mécanisme ci-dessus comprend un pignon 19 dont la rotation est commandée par le pivotement du bras 14. Ce pignon 19 est relié (voir figure 3) par d'autres pignons 20, 21, 22 à une poulie 23 sur laquelle est enroulée un câble 24 relié à l'arrière de l'élément intermédiaire 2. Ainsi, l'enroulement du câble 24 sur la poulie 23 provoque lors de la rotation de cette dernière, le coulissement de l'élément intermédiaire 2 le long des glissières 12, 13 s'étendant le long de l'élément arrière 3.

Par ailleurs, comme montré par la figure 3, la poulie 23 est solidaire en rotation de l'une 13 des glissières et est reliée à la série de pignons 22, 21 , 20 par un arbre de transmission 25 flexible ou à cardans 26.

La figure 2 montre d'autre part, que le câble 24 est enroulé sur une autre poulie 27 fixée près de l'extrémité de la glissière 13 adjacente à l'arrière 3a de l'élément arrière 3.

L'extrémité 24a du câble 24 est reliée à une biellette 28 s'étendant le long de la glissière 13 et reliée à l'un 8 des doigts portés par l'arrière de l'élément intermédiaire 2 qui est engagé dans la glissière 13.

Le mécanisme d'entraînement de l'élément de toit avant 1 vers l'élément intermédiaire 2 est identique à celui décrit ci-dessus.

Dans celui-ci, les poulies et le câble sont solidaires, non plus de l'élément arrière 3, mais de l'élément intermédiaire 2.

Dans l'exemple représenté sur la figure 2, les doigts 9, 31 sont solidaires d'une protubérance 29 située à l'arrière de l'élément intermédiaire 2.

De plus, deux doigts 8, 8a sont engagés dans la glissière 13, ces deux doigts 8, 8a étant portés par une biellette 30 articulée en 31 à la protubérance 29.

Par ailleurs, comme montré par la figure 2, l'extrémité des glissières 12, 13 adjacente l'arrière de l'élément intermédiaire 2 présente une courbure dirigée vers le haut, de telle sorte que l'élément intermédiaire 2 puisse coulisser sous l'élément arrière 3.

Il en est de même pour les glissières 10, 11 de l'élément intermédiaire 2 qui permettent à l'élément avant 1 de coulisser sous l'élément intermédiaire 2, comme montré par la figure 1.

Dans une version simplifiée de l'invention, le pignon 19 est directement solidaire en rotation de l'extrémité du bras pivotant 14 qui est articulé en 16 à l'élément arrière 3.

Dans ce cas, la rotation du bras 14 provoque directement la rotation de la poulie 23 et le coulissement de l'élément 2 sous l'élément 3.

Dans une version préférée, le pignon 19 est monté en rotation sur l'extrémité du bras pivotant 14 qui est articulée à l'élément arrière 3.

Le pignon 19 comporte, comme montré par la figure 2,une extension radiale 32 reliée de façon articulée à une biellette 33 elle-même reliée de façon articulée à un point fixe 34 de la carrosserie du véhicule.

Le mécanisme ci-dessus permet d'entraîner les éléments du toit 2 et 1 seulement lorsque l'élément 3 est suffisamment dégagé du coffre arrière 5 pour que les éléments 2 et 1 puissent avancer sans être gênés par l'arrière de la banquette arrière des passagers ou la tête de ceux-ci.

En effet, dans le mécanisme ci-dessus la rotation de la biellette 33 a peu d'incidence sur la rotation du pignon 19 au début du mouvement quand le toit est rangé dans le coffre 5, mais commence à avoir une influence quand le toit est suffisamment dégagé du coffre.

L'utilisation du bras pivotant 14 pour commander le déplacement des éléments de toit 1, 2, 3 vers le coffre 5 présente également un intérêt lorsque le coulissement des éléments avant 1 et intermédiaire 2 vers l'élément arrière 3 est commandé par des moteurs électriques ou hydrauliques embarqués dans ces éléments.

En effet, dans ce cas, le bras pivotant 14 peut supporter, le câble électrique ou les tubulures flexibles d'alimentation de ces moteurs électriques ou hydrauliques.

## Revendications

1. Toit escamotable pour véhicule, comprenant trois éléments de toit rigides (1, 2, 3), déplaçables entre une position dans laquelle ils recouvrent l'habitacle (4) du véhicule et une position dans laquelle, ils sont rangés à l'intérieur du coffre arrière (5) du véhicule, l'élément avant (1) pouvant coulisser par rapport à l'élément intermédiaire (2) et ce dernier pouvant coulisser par rapport à l'élément arrière (3) grâce à des doigts (6, 7 ; 8, 9) portés par l'élément avant (1) et par l'élément intermédiaire (2), engagés dans des glissières (10, 11 ; 12, 13) s'étendant le long des éléments intermédiaire (2) et arrière (3), **caractérisé en ce que** le déplacement de l'élément arrière (3) vers le coffre arrière (5) est commandé d'une part par un bras pivotant (14) articulé en un point fixe (15) de la carrosserie du véhicule et articulé audit élément arrière (3) et d'autre part par une glissière (17) s'étendant à l'intérieur du coffre arrière (5) dans laquelle est engagé un doigt (18) solidaire de la partie arrière de l'élément arrière (3).

2. Toit escamotable conforme à la revendication 1, **caractérisé en ce que** ledit bras pivotant (14) coopère, lors de son pivotement, avec un mécanisme commandant le coulissement de l'élément intermédiaire (2) par rapport à l'élément arrière (3).

3. Toit escamotable conforme à l'une des revendications 1 ou 2, **caractérisé en ce que** ledit mécanisme comprend un pignon (19) dont la rotation est commandée par le pivotement du bras (14), ce pignon (19) étant relié par d'autres pignons (20, 21, 22) à une poulie (23) sur laquelle est enroulée un câble (24) relié à l'arrière de l'élément intermédiaire (2), de sorte que l'enroulement du câble (24) sur ladite poulie (19) provoque le coulissement de l'élément intermédiaire (2) le long des glissières (12, 13) s'étendant le long de l'élément arrière (3).

4. Toit escamotable conforme à la revendication 3, **caractérisé en ce que** ladite poulie (23) est solidaire en rotation de l'une (13) des glissières et est reliée à la série de pignons (22, 21, 20) par un arbre de transmission (25) flexible ou à cardans.

5. Toit escamotable conforme à la revendication 4, **caractérisé en ce que** ledit câble (24) est enroulé sur une autre poulie (27) située près de l'extrémité de la glissière (13) adjacente à l'arrière de l'élément arrière (3), l'extrémité (24a) du câble (24) étant reliée à une biellette (28) s'étendant le long de la glissière (13) et reliée à l'un (8) des doigts portés par l'arrière de l'élément intermédiaire (2) qui est engagé dans la glissière (13).

6. Toit escamotable conforme à l'une des revendications 3 à 5, **caractérisé en ce que** ledit pignon (19) est directement solidaire en rotation de l'extrémité du bras pivotant (14) qui est articulée à l'élément arrière (3).

7. Toit escamotable conforme à l'une des revendications 3 à 5, **caractérisé en ce que** ledit pignon (19) est monté en rotation sur l'extrémité du bras pivotant (14) qui est articulée à l'élément arrière (3), ledit pignon (19) comportant une extension radiale (32) reliée de façon articulée à une biellette (33) elle-même reliée de façon articulée à la carrosserie du véhicule:

8. Toit escamotable conforme à la revendication 1, **caractérisé en ce que** dans lequel le coulissement des éléments avant (1) et intermédiaire (2) vers l'élément arrière (3) est commandé par des moteurs électriques ou hydrauliques embarqués dans lesdits éléments, ledit bras pivotant (14) supporte le câble électrique ou les tubulures flexibles d'alimentation desdits moteurs électriques ou hydrauliques.

## Claims

1. A retractable roof for a vehicle, comprising three rigid roof elements (1, 2, 3) able to move between a position in which they cover the passenger compartment (4) of the vehicle and a position in which they are stored inside the rear boot of the vehicle, the front element (1) being able to slide with respect to the intermediate element (2) and the latter being able to slide with respect to the rear element (3) using fingers (6, 7; 8, 9) carried by the front element (1) and by the intermediate element (2), engaged in slides (10, 11; 12, 13) extending along the intermediate (2) and rear (3) elements, **characterized in that** the motion of the rear element toward the rear boot (5) is controlled, on the one hand by a pivoting arm (14) hinged at a fixed point (15) of the body of the vehicle and hinged on said rear element (3) and, on the other hand by a slide (17) extending inside the rear boot (5) in which a finger (18) integral with the rear part of the rear element is engaged.

2. A retractable roof according to claim 1, **characterized in that** said pivoting arm (14) cooperates, during the pivoting thereof, with a mechanism controlling the sliding of the intermediate element (2) with respect to the rear element (3).

3. A retractable roof according to one of claims 1 or 2, **characterized in that** said mechanism comprises a pinion (19), the rotation of which is controlled by the pivoting of the arm (14), such pinion (19) being connected through other pinions (20, 21, 22) to a pulley (23) on which a cable (24) connected to the rear of the intermediate element (2) is wound, so that the winding of the cable (24) on said pulley (19) causes the intermediate element (2) to slide along the slides (12, 13) extending along the rear element (3).

4. A retractable roof according to claim 3, **characterized in that** said pulley (23) is integral, in rotation, with one (13) of the slides and is connected to the series of pinions (22, 21, 20) by a flexible or universal joint transmission shaft (25).

5. A retractable roof according to claim 4, **characterized in that** said cable (24) is wound on another pulley (27) located close to the end of the slide (13) near the rear portion of the rear element (3), with the end (24a) of the cable (24) being connected to a small connecting rod (28) extending along the slide (13) and connected to one (8) of the fingers carried by the rear portion of the intermediate element (2) which is engaged in the slide (13).

6. A retractable roof according to one of claims 3 to 5, **characterized in that** said pinion (19) is directly integral in rotation with the end of the pivoting arm (14) which is hinged on the rear element (3).

7. A retractable roof according to one of claims 3 to 5, **characterized in that** said pinion (19) is mounted for rotating on the end of the pivoting arm (14) which is hinged on the rear element (3), said pinion (19) including a radial extension (32) connected by hinges to a small connecting rod (33), itself connected by hinges to the body of the vehicle.

8. A retractable roof according to claim 1, **characterized in that** the sliding of the front (1) and intermediate element (2) towards the rear element (3) is controlled by electric or hydraulic motors aboard said elements, said pivoting arm (14) supporting the electric cable or the flexible tubings supplying said electric or hydraulic motors.

## Patentansprüche

1. Versenkbares Dach für ein Fahrzeug, das drei steife Dachelemente (1, 2, 3) umfaßt, die zwischen einer Position verschiebbar sind, in der sie den Fahrgastraum (4) des Fahrzeugs überdecken, und einer Position, in der sie im Innern des hinteren Kofferraums (5) untergebracht sind, wobei das vordere Element (1) gegenüber dem Zwischenelement (2) gleiten kann, und dieses Letztere gegenüber dem hinteren Element (3) durch Zapfen (6, 7, 8, 9), die vom vorderen Element (1) und vom Zwischenelement (2), die in Gleitschienen (10, 11, 12, 13) eingreifen, die sich entlang der Zwischenelemente (2) und der hinteren Elemente (3) erstrecken, getragen werden, **dadurch gekennzeichnet, daß** die Verschiebung des hinteren Elements (3) zum hinteren Kofferraum (5) eines Teils durch einen schwenkbaren Arm (14) gesteuert wird, der gelenkig an einem Festpunkt (15) der Karosserie des Fahrzeugs und gelenkig am besagten hinteren Element (3) und andererseits durch eine Gleitschiene (17) die sich im Innern des hinteren Kofferraums (5) erstreckt, in der ein Zapfen (18) eingreift, der fest mit dem hinteren Teil des hinteren Elements (3) verbunden ist.

2. Versenkbares Dach nach Anspruch 1, **dadurch gekennzeichnet, daß** der besagte Schwenkarm (14) bei seinem Schwenken mit einem Mechanismus zusammenwirkt, der das Gleiten des Zwischenelements (2) gegenüber dem hinteren Element (3) steuert.

3. Versenkbares Dach nach einem der Ansprüche 1 oder 2, Ritzel (19) umfaßt, dessen Drehung vom Schwenken des Arms (14) gesteuert wird, wobei dieses Ritzel (19) durch andere Ritzel (20, 21, 22) mit einer Scheibe (23) verbunden ist, auf der ein Kabel (24) aufgerollt ist, das hinter dem Zwischenelement (2) verbunden ist, so daß das Aufrollen des Kabels (24) auf der besagten Scheibe (19) das Gleiten des Zwischenelements (2) an den Gleitschienen entlang (12, 13) auslöst, die sich am hinteren Element (3) entlang erstrecken.

4. Versenkbares Dach nach Anspruch 3, **dadurch gekennzeichnet, daß** die besagte Scheibe (23) bei Drehung mit einer der Gleitschienen (13) fest verbunden ist, und daß sie mit der Serie Ritzel (22, 21, 20) durch eine Getriebewelle (25) flexibel oder mit Kardan verbunden ist.

5. Versenkbares Dach nach Anspruch 4, **dadurch gekennzeichnet, daß** das besagte Kabel (24) auf eine andere Scheibe (27) aufgewickelt wird, die sich in der Nähe des Endes der Gleitschiene (13) befindet und an die Rückseite des hinteren Elements (3) anschließt, wobei das Endteil (24a) des Kabels (24) mit einer Anlenkstange (28) verbunden ist, die sich entlang der Gleitschiene (13) erstreckt und mit einem der Zapfen (8) verbunden ist, die von der Rückseite des Zwischenelements (2) getragen werden, das in die Gleitschiene (13) eingreift.

6. Versenkbares Dach nach einem beliebigen der vorstehenden Ansprüche 3 bis 5, **dadurch gekennzeichnet, daß** das besagte Ritzel (19) drehbar mit dem Ende des schwenkbaren Arms (14) direkt fest verbunden ist, der gelenkig am hinteren Element (3) verbunden ist.

7. Versenkbares Dach nach einem beliebigen der vorstehenden Ansprüche 3 bis 5, **dadurch gekennzeichnet, daß** das besagte Ritzel (19) drehbar auf das Ende des Schwenkarms (14) montiert ist, der gelenkig mit dem hinteren Element (3) verbunden ist, wobei das besagte Ritzel (19) eine radiale Verlängerung (32) umfaßt, die gelenkig mit einer Ablenkstange verbunden ist, die selbst gelenkig mit der Karosserie des Fahrzeugs verbunden ist.

8. Versenkbares Dach nach Anspruch 1, **dadurch gekennzeichnet, daß** darin das Verschieben des vorderen (1) und des Zwischenelements (2) zum hinteren Element (3) von elektrischen oder hydraulischen Motoren in den besagten Elementen gesteuert wird, wobei der besagte Schwenkarm (14) das elektrische Kabel oder die flexiblen Versorgungsstutzen der besagten elektrischen oder hydraulischen Motoren trägt.
